# EUROPÄISCHE PATENTSCHRIFT

(11) **EP 3 428 132 B1**
(45) Veröffentlichungstag und Bekanntmachung des Hinweises auf die Patenterteilung: **30.08.2023**
(21) Anmeldenummer: 17180502.1
(22) Anmeldetag: 10.07.2017
(51) Int. Cl.: C03B 19/06, C03C 3/06, C03C 17/23, C03B 20/00, C03B 32/02

(54) **QUARZGLASBAUTEIL MIT HOHER THERMISCHER STABILITÄT, HALBZEUG DAFÜR UND VERFAHREN ZUR HERSTELLUNG DESSELBEN**
QUARTZ GLASS COMPONENT HAVING HIGH THERMAL STABILITY, SEMI-FINISHED PRODUCT FOR SAME AND METHOD OF MANUFACTURING THE SAME
COMPOSANT EN VERRE DE QUARTZ À STABILITÉ THERMIQUE ÉLEVÉE, SEMI-PRODUIT ASSOCIÉ ET SON PROCÉDÉ DE FABRICATION

(43) Veröffentlichungstag der Anmeldung: 16.01.2019
(73) Patentinhaber: Heraeus Quarzglas GmbH & Co. KG, 63450 Hanau (DE)
(72) Erfinder: SCHENK, Christian, 55218 Ingelheim (DE); TSCHOLITSCH, Nadine, 63457 Hanau (DE); BAIER, Thomas, 63452 Hanau (DE)
(74) Vertreter: Staudt, Armin Walter

(56) Entgegenhaltungen:
- EP-A1- 2 460 913
- GB-A- 1 377 804
- JP-A- S6 311 533
- US-A- 3 927 697

## Beschreibung

### Technischer Hintergrund

Die Erfindung betrifft ein Quarzglasbauteil mit hoher thermischer Stabilität, das auf einer Beschichtungsfläche eines Basiskörpers aus Quarzglas eine kristalline Stabilisierungsschicht aufweist, die SiO₂ und einen Dotierstoff enthält.

Außerdem betrifft die Erfindung ein Halbzeug zur Herstellung eines Quarzglasbauteils, das auf einer Beschichtungsfläche eines Basiskörpers aus Quarzglas eine Kristallbildungs-Schicht aufweist, die einen Kristallisationspromotor enthält.

Weiterhin betrifft die Erfindung ein Verfahren zur Herstellung eines Quarzglasbauteils mit hoher thermischer Stabilität, wobei auf einer Beschichtungsfläche eines Basiskörpers aus Quarzglas eine Kristallbildungs-Schicht erzeugt wird, die einen Kristallisationspromotor enthält.

Für Fertigungsprozesse, bei denen es auf hohe Reinheit ankommt, werden häufig Bauteile aus Quarzglas eingesetzt. Die Temperaturstabilität von Quarzglas bildet dabei einen begrenzenden Faktor. Als unterer Erweichungspunkt für Quarzglas werden in der Literatur Temperaturwerte um 1150 °C angegeben. Häufig liegen die erforderlichen Prozesstemperaturen jedoch oberhalb dieser Temperatur, so dass es zu plastischen Verformungen der Quarzglasbauteile kommen kann.

Es ist daher vorgeschlagen worden, die thermische Stabilität eines Quarzglasbauteils zu erhöhen, indem es mit einer Oberflächenschicht aus Cristobalit versehen wird. Der Schmelzpunkt von Cristobalit liegt bei etwa 1720 °C. Im Folgenden wird eine derartige, teilweise oder vollständig kristalline Oberflächenschicht auch als "Stabilisierungsschicht" bezeichnet.

Eine Gefügeumwandlung bei einer Temperatur um 250 °C, einhergehend mit einer displaziven Volumenänderung, die auch als "Cristobalitsprung" bekannt ist, kann jedoch zur Zerstörung der Stabilisierungsschicht und des Bauteils führen. Daher ist ein Abkühlen der bei erhöhter Temperatur einmal vollständig ausgebildeten Stabilisierungsschicht kaum noch möglich, so dass die diese in der Regel erst beim oder unmittelbar vor dem bestimmungsgemäßen Einsatz des Bauteils ausgebildet wird. Um die Ausbildung der Stabilisierungsschicht beim Einsatz zu fördern, hat das Bauteil eine Beschichtung, die eine als Kristallisationspromotor wirkende Substanz oder mehrere solcher Substanzen enthält. Diese Beschichtung wird hier als "Kristallbildungs-Schicht" bezeichnet.

### Stand der Technik

Unter der Bezeichnung "HSQ400" (Handelsname der Heraeus Quarzglas GmbH & Co. KG) sind thermisch zu stabilisierende Halbzeuge aus elektrogeschmolzenem Quarzglas mit Kristallbildungs-Schicht im Handel erhältlich. Dabei wird eine dünne Al₂O₃-Schicht auf die Beschichtungsfläche aufgebracht. In hoher Konzentration wirkt Al₂O₃ als Kristallisationspromotor, so dass beim Aufheizen des Bauteils auf eine Temperatur von mindestens 1280°C eine Schicht aus kristalliner SiO₂-Phase, insbesondere aus Cristobalit entsteht. Die kristalline Schicht wird im Verlaufe der weiteren Temperierung dicker und wächst in die Beschichtungsfläche hinein, so dass sich infolge der im Vergleich zu Quarzglas höheren Erweichungstemperatur von Cristobalit die gewünschte thermische Stabilisierung einstellt.

In der US 3,927,697 A wird vorgeschlagen, zur thermischen Stabilisierung eines Quarzglas-Diffusionsrohres eine Stabilisierungsschicht zu erzeugen, indem auf der Außenoberfläche des Rohres ein Gemisch aus SiO₂-Pulver und einer Substanz aufgebracht wird, die eine Entglasung von Quarzglas fördert und die somit als Kristallisationspromotor wirkt. Als Kristallisationspromotoren werden Cristobalit-Pulver sowie oxidische, nitridische und carbidische Verbindungen aus Bor, Aluminium, Phosphor, Antimon, Zink, Magnesium, Kalzium oder Gallium genannt. Bei einer bevorzugten Verfahrensweise wird auf die Außenwand eines Quarzglas-Hohlzylinders eine Dispersion (Schlicker) aus Wasser und einem mit Al₂O₃ dotierten Quarzglaspulver aufgebracht und die Schlickerschicht getrocknet. Anschließend wird der Hohlzylinder zu einem Quarzglasrohr elongiert, wobei die Rohr-Außenwand unter Bildung der Stabilisierungsschicht kristallisiert.

Ein ähnliches Verfahren zur Herstellung eines Quarzglasbauteils mit verbesserter Temperaturfestigkeit ist auch aus der EP 1 506 142 A1 bekannt. Das QuarzglasBauteil, beispielsweise ein Tiegel oder ein Rohr, wird mit einer Stabilisierungsschicht aus Cristobalit versehen, indem ein Schlicker, der SiO₂-Pulver und Dotierstoff-Pulver auf das Bauteil aufgebracht wird und auf eine Temperatur im Bereich von 1000 - 1600 °C erhitzt wird. Der Dotierstoff besteht beispielsweise aus Barium, Strontium oder Kalzium oder einem Seltenerdmetall. Die Dotierstoff-Konzentration in der Beschichtung beträgt mindestens 0,1 Atom-%.

Bei dem Verfahren gemäß der EP 753 605 A1 wird die thermische Stabilität eines handelsüblichen Tiegelbasiskörpers aus opakem, blasenhaltigem Quarzglas dadurch erhöht, dass dessen glasige Wandung mit einer chemischen Lösung behandelt wird, die einen Kristallisationspromotor enthält. Beim Aufheizen des Quarzglastiegels - wie etwa beim bestimmungsgemäßen Einsatz beim Kristallziehprozess - kristallisiert das Quarzglas im Bereich der beschichteten Tiegelwandung oberflächlich unter Bildung kristalliner SiO₂-Phase aus. Als Kristallisationspromotor werden im Wesentlichen Bor-, Erdalkali- und Phosphorverbindungen genannt, bevorzugt wird Bariumhydroxid eingesetzt. Die im Vergleich zu Quarzglas höhere Erweichungstemperatur der kristallinen SiO₂-Phase trägt zu einer höheren thermischen Festigkeit des Quarzglastiegels bei, sie wirkt einem Eintrag von Verunreinigungen aus der Tiegelwandung in die Siliziumschmelze entgegen und sie kann die chemische Beständigkeit der Oberfläche verbessern.

Ein ähnliches Verfahren zur Stabilisierung eines Quarzglaselements mit mindestens zwei einander gegenüberliegenden Oberflächen ist auch aus der GB 1377804 A bekannt. Die Oberflächen haben eine Cristobalit-Schicht, die durch OberflächenEntglasung des Quarzglases gebildet wird. Als Kristallisationspromotoren werden Aluminium, Magnesium, Calcium, Cäsium oder Mischungen davon genannt.

Aus der JP S63-11533 A ist ein Reaktionsrohr aus Quarzglas bekannt, auf dessen Innen- und/oder Außenseite eine Schicht aus Beta-Cristobalit erzeugt wird. Als Kristallisationspromotor dienen feine Glaspartikel, die auf der Wandung aufgebracht werden. Die feinen Glaspartikel zeichnen sich durch hohe Reinheit aus und werden durch ein chemisches Dampfabscheideverfahren oder durch ein Hydrolyseverfahren erzeugt.

Die EP 2 460 913 A1 schlägt zur Erhöhung der thermischen Stabilität eines Quarzglastiegels zum Ziehen eines Silizium-Einkristalls vor, dass die Tiegelwandung von innen nach außen gesehen aufgebaut ist aus einer Innenschicht aus undotiertem Quarzglas, einer Zwischenschicht aus Quarzglas, in der Inselbereiche mit einem Kristallisationspromotor inhomogen verteilt sind, und einer Außenschicht aus Quarzglas, die den Kristallisationspromotor in homogener Verteilung enthält. Die Inselbereiche haben Dicken im Bereich von 1 bis 900 µm. Als Kristallisationspromotor dient Aluminiumoxid mit Konzentrationen im Bereich von 20 bis 60 ppm.

### Technische Aufgabenstellung

Die nach den bekannten Ansätzen erzeugten Quarzglas-Bauteile zeigen bei thermisch anspruchsvollen Prozessen, insbesondere bei schnellen Aufheizprozessen trotz Ausbildung einer Stabilisierungsschicht merkliche Deformationen, die bis zum Versagen des Bauteils führen können. Das kann darauf zurückgeführt werden, dass die sich ausbildende kristalline Schicht anfangs dünn ist, so dass sie nur wenig Last aufnehmen kann und deswegen eine geringe Stabilisierungswirkung entfaltet. Oder darauf, dass der Keimbildungs- und Kristallisationsprozess vergleichsweise spät einsetzt oder langsam abläuft, so dass sich auch hierbei eine anfänglich geringe Stabilisierung einstellt. Bei andauernder Temperaturbeaufschlagung kann die kristalline Schicht auch in die Beschichtungsoberfläche des Bauteils hineinwachsen und dadurch zu einer mechanischen Schwächung führen.

Der Erfindung liegt daher die Aufgabe zugrunde, ein Quarzglasbauteil mit verbesserter thermischer Festigkeit und Langzeitstabilität bereitzustellen, das insbesondere auch bei schnellen Aufheizprozessen eine vergleichsweise geringe Verformung zeigt.

Außerdem liegt der Erfindung die Aufgabe zugrunde, ein Halbzeug und ein Verfahren zur reproduzierbaren Herstellung eines derartigen Quarzglasbauteils anzugeben.

### Allgemeine Beschreibung der Erfindung

Hinsichtlich des Verfahrens wird diese Aufgabe ausgehend von einem Verfahren der eingangs genannten Gattung erfindungsgemäß dadurch gelöst, dass eine amorphe SiO₂-Partikel enthaltende, poröse Kristallbildungs-Schicht mit einer mittleren Dicke im Bereich von 0,1 bis 5 mm erzeugt wird, und dass als Kristallisationspromotor eine Substanz eingesetzt wird, die Cäsium und/oder Rubidium enthält, und dass die Kristallisationspromotor-Substanz eine Schmelztemperatur unterhalb von 1150 °C hat.

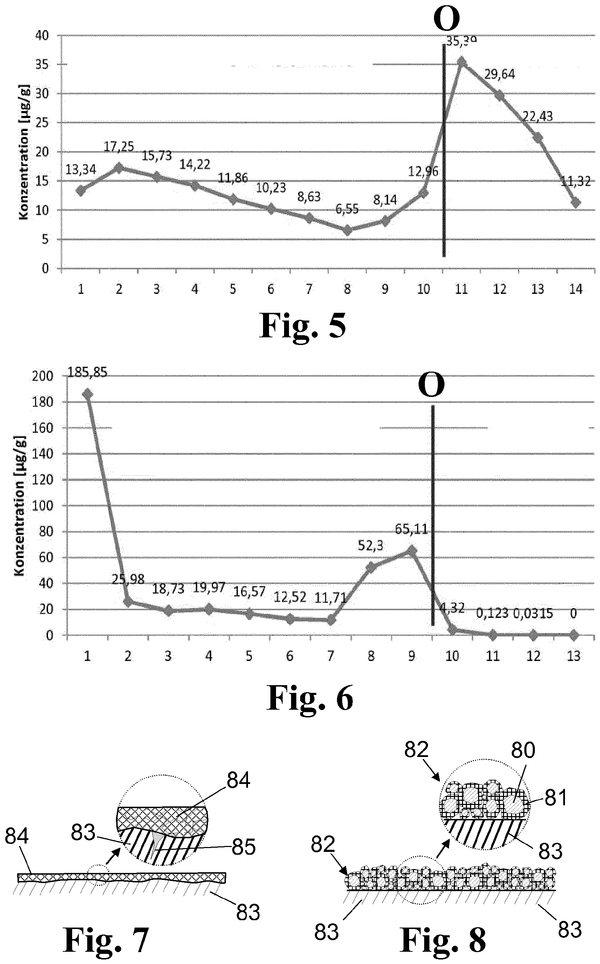

Die beim erfindungsgemäßen Verfahren erzeugte Kristallbildungs-Schicht soll beim Erhitzen des beschichteten Bauteils auskristallisieren und dadurch dessen thermische Stabilisierung bewirken, wie dies auch sonst auch sonst bei Stabilisierungsschichten dem Stand der Technik bekannt ist. Sie zeichnet sich aber demgegenüber durch folgende Merkmale aus, die in ihrer Kombination den gewünschten, verbesserten Stabilisierungseffekt bewirken:
(1) Die Kristallbildungs-Schicht enthält SiO₂-Partikel in amorpher Form. Diese glasigen Partikel sind in der Lage, beim Erhitzen zu kristallisieren (die Kristallisation von Glas wird auch als "Entglasung" oder "Entglasen" bezeichnet). Die Kristallbildungs-Schicht ist daher nicht nur Auslöser, sondern selbst Gegenstand der Kristallisation und sie bildet mindestens einen Teil der Stabilisierungsschicht. Dies ist schematisch in **Figur 8** dargestellt. Die Cristobalitbildung 81 beginnt an den Oberflächen der amorphen SiO₂-Partikel 80, die die Kristallbildungs-Schicht 82 bilden. Bereits die kristallisierende Kristallbildungs-Schicht bewirkt eine Stabilisierung des Basiskörpers 83. Es ist nicht erforderlich, dass auch das Quarzglas des Basiskörpers 83 entglast. Die in der Kristallbildungs-Schicht in amorpher Form vorliegenden SiO₂-Partikel 80 zeigen auch nach ihrem Entglasen eine große chemische Ähnlichkeit zu dem glasigen SiO₂ des Basiskörpers 83 und tragen so zur Haftung der kristallinen Schicht an dem Basiskörper 83 bei. Im Vergleich dazu setzt die Kristallbildung - wie in Figur 7 schematisch dargestellt - ohne derartige SiO2-partikelhaltige Kristallbildungs-Schicht 82 an der Oberfläche des Basiskörpers 83 ein. Auch wenn diese Kristallisation durch Auftragen eines Kristallisationspromotors gefördert werden kann, so erfolgt das Einsetzen der Kristallbildung bei vergleichsweise höherer Temperatur und/oder nach längerer Heizdauer und es bildet sich eine von der Oberfläche ausgehende Entglasung, die den Basiskörper 83 beispielsweise durch Bildung oberflächennaher Risse 85 sogar mechanisch schwächen kann, bevor die kristalline Oberflächenschicht 84 ihre thermische Stützwirkung entfaltet.
(2) Die Kristallbildungs-Schicht ist hinreichend dick, um nach ihrer Kristallisation die zu erwartende mechanische Last aufnehmen zu können. Ihre mittlere Dicke liegt im Bereich von 0,1 bis 5 mm, bevorzugt im Bereich 0,5 bis 3 mm.
(3) Die Kristallbildungs-Schicht ist porös und hat demnach eine große Oberfläche von mehr als 5 m²/g. Der primäre Kristallisationsmechanismus bei Quarzglas ist die Oberflächenentglasung. Porosität und Oberfläche fördern daher eine rasche Keimbildung und Kristallisation beim Aufheizen der Schicht. Andererseits hat eine poröse kristalline Schicht eine geringere Festigkeit als eine weniger poröse kristalline Schicht. Daher ist es wünschenswert, dass sich die Porosität zeitlich vor der Entglasung der Schicht verringert; was üblicherweise automatisch durch das Sintern beim Erhitzen der Schicht geschieht.
(4) In der Kristallbildungs-Schicht ist eine Substanz vorhanden, die mindestens eine der Alkalien Cäsium oder Rubidium enthält. Es können auch mehrere derartige Substanzen vorhanden sein. Das Alkalielement liegt in der Regel in Form einer chemischen Verbindung vor. Andere, die Kristallisation von Quarzglas fördernde Komponenten können zusätzlich vorhanden sein. Cäsium oder Rubidium bewirken aber auch in geringer Konzentration und insbesondere bei einer überraschend niedrigen Temperatur unterhalb des Transformationsbereiches von natürlichem Quarzglas (also unterhalb von 1200 C) eine Kristallisation der amorphen SiO₂-Partikel. Andererseits hat es sich gezeigt, dass sie das Dichtsintern der porösen Kristallbildungs-Schicht nicht oder nicht wesentlich behindern und dass sie auch nicht in großem Umfang in das Quarzglas des Basiskörpers eindringen. Diese Wirkungen können auf eine geringe Diffusivität dieser Ionen in SiO₂ und auf ihren im Vergleich zu anderen Alkali-Ionen großen Ionenradius zurückgeführt werden (Ionenradius von Rubidium: 148 pm, Ionenradius von Cäsium: 169 pm). Dadurch bleibt die Entglasung der Kristallbildungs-Schicht im Wesentlichen auf den Bereich der zu bildenden Stabilisierungsschicht beschränkt.

Die oben erläuterten Wirkungen ergeben sich durch die poröse Schicht aus amorphen SiO₂-Partikeln in Verbindung mit einem Kristallisationspromotor in Form der Alkalien Cäsium und/oder Rubidium. Es hat sich gezeigt, dass bereits beim Erhitzen der erfindungsgemäß ausgestalteten Kristallbildungs-Schicht auf eine Temperatur von weniger als 1150 °C eine Cristobalitbildung einsetzt, die vergleichsweise rasch fortschreitet und die gesamte Kristallbildungs-Schicht erfasst und in eine Stabilisierungsschicht aus kristallinem SiO₂ verwandelt. Da die Entglasungstemperatur, bei der das Entglasen einsetzt, niedriger ist als die Erweichungstemperatur von Quarzglas, kann die Stabilisierungsschicht vollständig oder teilweise bei einer Temperatur unterhalb der Erweichungstemperatur ausgebildet werden. Oder - im Fall eines Aufheizens auf eine Temperatur oberhalb von 1150 °C - beginnt die Stabilisierungswirkung infolge der sich bildenden Stabilisierungsschicht früher als das Erweichen des Quarzglas-Basiskörpers. Dadurch wird eine hohe Verformungsstabilität erreicht.

Die Kristallisationspromotor-Substanz liegt in der Kristallbildungs-Schicht nicht in metallischer, sondern in Form einer chemischen Verbindung vor, beispielsweise als Salz. Es wird eine Kristallisationspromotor-Substanz eingesetzt wird, deren Schmelztemperatur unterhalb von 1150 °C, vorzugsweise unterhalb von 1100 °C liegt.

Die Ausbildung einer Schmelzphase erleichtert das Verdichten der porösen Kristallbildungs-Schicht. Die Mechanismen zum Verdichten und zur Entglasung der Kristallbildungs-Schicht beruhen jeweils auf temperaturabhängigen Diffusions- und anderen Massentransportprozessen und verlaufen unabhängig voneinander und teilweise in Konkurrenz zueinander. Denn eine verdichtete Kristallbildungs-Schicht kann weiter kristallisieren, aber eine vollständig kristallisierte Schicht kann kaum noch weiter verdichtet werden. Im bevorzugten Fall, bei dem das Verdichten bei niedriger Temperatur beginnt, insbesondere bei einer Temperatur unterhalb derjenigen, bei der Entglasung merklich einsetzt, wird der Verdichtungsmechanismus gegenüber dem Entglasungsmechanismus gefördert, was im Ergebnis in Richtung einer höheren Dichte und damit einhergehend einer höheren Festigkeit der verglasten Schicht geht. Geeignete Verbindungen sind beispielsweise Chloride; die Schmelztemperatur von Rubidiumchlorid liegt bei 715 °C und die von Cäsiumchlorid bei 646 °C.

Der Entglasungsmechanismus wird durch die Konzentration des oder der Kristallisationspromotor-Substanzen beeinflusst; je höher die Konzentration ist, umso schneller verläuft die Entglasung. Andererseits kann der Kristallisationspromotor oder ein Teil davon in Prozessen, in denen das stabilisierte Quarzglasbauteil eingesetzt wird, als Verunreinigung wirken. Daher wird die Konzentration so niedrig wie möglich gehalten. Im Hinblick darauf hat es sich als günstig erwiesen, wenn der Anteil der Kristallisationspromotor-Substanz in der porösen Kristallbildungs-Schicht mindestens 0,025 mol-% und maximal 0,5 mol-% beträgt. Die Bezugsgröße (100%) ist dabei die in der Kristallbildungs-Schicht vorhandene molare oxidische Konzentration von Silicium, des Dotierstoffs und etwaiger anderer absichtlich hinzugefügter Substanzen wie beispielsweise Aluminum, vorliegend in der jeweils höchsten Oxidationsstufe.

Die amorphen SiO₂-Partikel in der Kristallbildungs-Schicht liegen beispielsweise als SiO₂-Ruß (häufig auch als "SiO₂-Soot" bezeichnet), als Granulat aus derartigem SiO₂-Soot, als sphärische dichte SiO₂-Teilchen oder als zerkleinerte Quarzglaskörner oder aus Mischungen dieser Partikel-Varianten vor.

Als besonders günstig hat es sich eine Teilchengrößenverteilung im Bereich von 0,1 µm bis 100 µm erwiesen, wobei Teilchengrößen im Bereich zwischen 1 µm und 60 µm den größten Volumenanteil aller Teilchen ausmachen. Die SiO₂-Teilchen können eine einmodale oder eine mehrmodale Teilchengrößenverteilung zeigen. Bei mehrmodaler Teilchengrößenverteilung liegt ein erstes Maximum der Größenverteilung bevorzugt im Bereich von etwa 0,5 bis 5 µm, und ein zweites Maximum liegt im Bereich von 5 bis 50 µm. Dies erleichtert die Einstellung einer hohen Packungsdichte in der Kristallbildungs-Schicht. Derartige Teilchengrößen und Teilchengrößenverteilungen können durch Zerkleinern von Quarzglas erzeugt werden. In dem Zusammenhang hat es sich besonders bewährt, wenn durch Zerkleinern von Quarzglas erzeugte, amorphe SiO₂-Partikel den größten Volumenanteil der Kristallbildungs-Schicht ausmachen.

Derartige Partikel werden erhalten, indem gröbere Quarzglas-Körner, Quarzglas-Bruchstücke oder Quarzglas-Formkörper mechanisch zerkleinert werden, was vorzugsweise durch Vermahlen geschieht. Durch Zerkleinern, insbesondere Zerbrechen und Zermahlen von Quarzglasformkörpern erzeugte Partikel weisen gegebenenfalls Bruchflächen auf. Die Bruchstücke haben in der Regel keine sphärische Morphologie, sondern eine nicht-sphärische, scherbenartige Morphologie, die im Folgenden als "splittrige Morphologie" bezeichnet wird. Diese ist für ein dichtes, flächiges Zusammenlagern und für eine gegenseitige Verzahnung der SiO₂-Bruchstücke in einer Grünschicht oder in einer Schüttung förderlich. Diese flächige Verzahnung an Bruchflächen der SiO₂-Partikel bildet eine Art "Kartenhausstruktur", die eine höhere Dichte der Kristallbildungs-Schicht ermöglicht und die sich auf deren Festigkeit positiv auswirkt und die Sinteraktivität erhöht. Bevorzugt haben mindestens 80 % der SiO₂-Partikel, besonders bevorzugt mindestens 90 % der SiO₂-Partikel mit einer Teilchengröße von mehr als 10 µm eine nicht-sphärische, splittrige Morphologie.

Die poröse Kristallbildungs-Schicht kann beispielsweise durch CVD-Verfahren oder mittels Sol-Gel-Technik erzeugt werden. Bei einer besonders bevorzugten Verfahrensvariante umfasst das Erzeugen der Kristallbildungs-Schicht folgende Verfahrensschritte:
(a) Auftragen einer Dispersion, die SiO₂-Partikel in einer Flüssigkeit enthält als Schlickerschicht auf der Beschichtungsfläche, und
(b) Trocknen der Schlickerschicht unter Bildung einer Grünschicht.

Die Dispersion - auch als" Schlicker" bezeichnet - enthält mindestens einen Teil der SiO₂-Partikel und bevorzugt alle SiO₂-Partikel der Kristallbildungs-Schicht. Sie wird mittels konventioneller Beschichtungsmethoden auf die Beschichtungsfläche des Basiskörpers aufgebracht, beispielsweise durch Gießen, Sprühen, Tauchen, Fluten, Schleudern, Rakeln oder Streichen.

Vorzugsweise enthält die Dispersion den Kristallisationspromotor oder eine Vorstufe des Kristallisationspromotors in gelöster Form. Dadurch ist besonders homogene Kristallisationspromotor-Verteilung in der Schlickerschicht erzielbar. Die homogene Verteilung erleichtert die gleichmäßige Kristallisation und erlaubt es, die Konzentration des Kristallisationspromotors so gering wie möglich zu halten, als beispielsweise auf einem Anteil im Bereich von 0,025 bis 0,5 mol.-% (wie oben bereits erläutert).

Die Schlickerschicht wird getrocknet, und es wird daraus eine sogenannte Grünschicht erhalten. Die Grünschicht ist porös, wobei im Hinblick auf eine hohe Festigkeit vorzugsweise eine Gründichte von mindestens 1,7 g/cm³eingestellt wird. Die Gründichte wird im Wesentlichen durch den Feststoffgehalt der Dispersion und durch die Form der SiO₂-Partikel vorgegeben. Der Feststoffgehalt liegt beispielsweise im Bereich von 65 bis 85 Gew.-% und die SiO₂-Partikel sind bevorzugt in überwiegender Anzahl solche mit der oben erläuterten, splittrigen Morphologie.

Die getrocknete, poröse Grünschicht kann weiterbearbeitet werden; sie kann beispielsweise mit einer Lösung imprägniert werden, die den Kristallisationspromotor oder eine Vorläufersubstanz dafür enthält. Bei einer besonders bevorzugten Verfahrensvariante ist aber vorgesehen, dass bereits die Dispersion mindestens einen Teil der Kristallisationspromotor-Konzentration oder einer Vorläufersubstanz desselben enthält. Bevorzugt enthält die Dispersion den gesamten Anteil an Kristallisationspromotor entsprechend seinem Anteil in der Kristallbildungs-Schicht. Der Kristallisationspromotor oder eine Vorläufersubstanz dafür liegen dabei vorzugsweise in gelöster Form vor, so dass eine homogene Verteilung in der Dispersion und eine gleichmäßige Dotierung der SiO₂-Partikel in der Grünschicht gewährleistet sind. Beim Trocknen der Schlickerschicht fällt der Kristallisationspromotor aus bedeckt gleichmäßig die Oberflächen der amorphen SiO₂-Partikel.

Die getrocknete Grünschicht zeichnet sich durch gute Haftfestigkeit auf dem Basiskörper aus, was eine wichtige Bedingung für die Entfaltung einer Stützwirkung bereits vor dem Sintern ist. Auch beim Sintern bleiben die Haftung und damit die Stützwirkung erhalten, so dass der Basiskörper beim Sintern seine Form weitgehend beibehält, auch wenn die Dotierstoff(e) Cäsium und/oder Rubidium eingesetzt werden. Diese Dotierstoffe beeinträchtigen die Haftfestigkeit im Vergleich zu einer dotierstofffreien Grünschicht nicht oder nur unwesentlich.

Die kristallisationspromotorhaltige Grünschicht bildet eine Kristallbildungs-Schicht im Sinne der Erfindung, so dass das so konditionierte Quarzglasbauteil grundsätzlich für den bestimmungsgemäßen Einsatz vorbereitet ist. Die Grünschicht ist allerdings empfindlich und kann beispielsweise bei der weiteren Handhabung und dem Transport des Quarzglasbauteils abgerieben oder beschädigt werden.

Im Hinblick darauf ist eine gewisse thermische Verfestigung vorteilhaft, bei der die Grünschicht bei einer Temperatur im Bereich von 670 °C bis 1000 °C thermisch verdichtet wird.

Eine vorherige Kristallisation der Kristallbildungs-Schicht soll aber möglichst vermieden werden. Die Porosität der Kristallbildungs-Schicht wird dabei verringert und eine Dichte von vorzugsweise mindestens 1,75 g/cm³ erreicht. Die Verdichtungstemperatur ist daher vorteilhafterweise so niedrig wie möglich gewählt. Sie kann besonders niedrig eingestellt werden, wenn die Grünschicht Sinterhilfsmittel enthält, die die Sinter-Temperatur herabsetzen. Sinterhilfsmittel in diesem Sinn kann auch die Kristallisationspromotor- Substanz oder eine Vorläufersubstanz derselben sein, wenn die Verdichtungstemperatur oberhalb von deren Schmelzpunkt und unterhalb des Siedepunktes liegt. Gegebenenfalls wird durch Flüssigphasenbildung eine mechanisch stabilere, verdichtete Grünschicht erhalten, die im Idealfall bis dahin keine durchgehende Kristallisation zeigt, sondern allenfalls Kristallkeime. Erst beim bestimmungsgemäßen Einsatz des Quarzglas-Bauteils kommt es zur vollständigen Cristobalitbildung unter Bildung der Stabilisierungsschicht. Der Mechanismus des Flüssigphasensinterns, bei dem der Dotierstoff als niedrigschmelzende Komponente agiert, die die Verbindung der höherschmelzenden SiO₂-Körner fördert, beginnt geringfügig (etwa 25 °C) oberhalb der Schmelztemperatur des jeweiligen Dotierstoffes. Die so berechnete Start-Temperatur für das Flüssigphasensintern liegt beispielsweise für CsCl bei etwa 670°C und für RbCl bei etwa 740°C.

Hinsichtlich des Halbzeugs zur Herstellung eines Quarzglasbauteils mit hoher thermischer Stabilität wird die Aufgabe ausgehend von einem Halbzeug der eingangs genannten Gattung erfindungsgemäß dadurch gelöst, dass die Kristallbildungs-Schicht amorphe SiO₂-Partikel enthält, dass sie porös ist, dass sie eine mittlere Dicke im Bereich von 0,1 bis 5 mm aufweist und dass der Kristallisationspromotor eine Substanz ist, die Cäsium und/oder Rubidium enthält, und dass die Kristallisationspromotor-Substanz eine Schmelztemperatur unterhalb von 1150 °C aufweist.

Das erfindungsgemäße Halbzeug wird beispielsweise anhand des oben erläuterten Verfahrens gemäß der Erfindung erhalten. Es trägt eine Kristallbildungs-Schicht, die beim Erhitzen auskristallisieren und dadurch eine thermische Stabilisierung bewirken soll.

Die Kristallbildungs-Schicht enthält SiO₂-Partikel in amorpher Form und bevorzugt mit splittriger Morphologie. Diese glasigen Partikel sind in der Lage beim Erhitzen zu kristallisieren, wobei die Kristallbildung zunächst und möglichst ausschließlich in der Kristallbildungs-Schicht erfolgen soll.

Die Kristallbildungs-Schicht hat eine mittlere Dicke im Bereich von 0,1 bis 5 mm, bevorzugt im Bereich 0,5 bis 3 mm, und ist damit so dick, dass sie nach ihrer Kristallisation für sich allein in der Lage ist, die zu erwartende mechanische Last aufnehmen zu können. Sie ist porös und hat demnach eine große Oberfläche (mehr als 5 m²/g), was eine rasche Keimbildung und Kristallisation beim Aufheizen der Schicht fördert.

In der Kristallbildungs-Schicht liegt ist mindestens eine der Alkalien Cäsium oder Rubidium enthalten. Im bevorzugten Fall sind nur die Alkalien Cäsium oder Rubidium, und im besonders bevorzugten Fall nur Rubidium enthalten. Das Alkalielement liegt in der Regel in Form einer chemischen Verbindung vor. Andere, die Kristallisation von Quarzglas fördernde Komponenten können zusätzlich vorhanden sein. Cäsium oder Rubidium zeigen in Quarzglas eine geringe Diffusivität im Vergleich zu anderen Alkali-Ionen. Sie behindern das Dichtsintern der porösen Kristallbildungs-Schicht nicht oder nicht wesentlich und sie bewirken auch in geringer Konzentration und insbesondere bei einer überraschend niedrigen Temperatur unterhalb der Erweichungstemperatur von Quarzglas (also unterhalb von 1150 °C) eine Kristallisation von amorphem SiO₂. Wegen ihrer geringen Diffusivität in Quarzglas bleibt die Entglasung im Wesentlichen auf den Bereich der der Kristallbildungs-Schicht beschränkt.

Bereits beim Erhitzen der erfindungsgemäß ausgestalteten Kristallbildungs-Schicht auf eine Temperatur von weniger als 1150 °C setzt eine Cristobalitbildung ein, die vergleichsweise rasch fortschreitet und die gesamte Kristallbildungs-Schicht erfasst und in eine Stabilisierungsschicht aus kristallinem SiC₂ verwandelt. Da die Entglasungstemperatur, bei der das Entglasen einsetzt niedriger ist als die Erweichungstemperatur von Quarzglas, kann die Stabilisierungsschicht vollständig oder teilweise bei einer Temperatur unterhalb der Erweichungstemperatur ausgebildet werden. Oder - im Fall eines Aufheizens auf eine Temperatur oberhalb von 1150 °C - beginnt die Stabilisierungswirkung infolge der sich bildenden Stabilisierungsschicht früher als das Erweichen des Quarzglas-Basiskörpers. In jedem Fall wird eine hohe Verfomungsstabilität erreicht.

Die Kristallisationspromotor-Substanz liegt in der Kristallbildungs-Schicht in Form einer chemischen Verbindung vor, beispielsweise als Salz. Die Kristallisationspromotor-Substanz weist eine Schmelztemperatur unterhalb von 1150 °C, vorzugsweise unterhalb von 1100 °C auf.

Die Ausbildung einer Schmelzphase erleichtert das Verdichten der porösen Kristallbildungs-Schicht. Im bevorzugten Fall, dass das Verdichten bei niedriger Temperatur, insbesondere bei einer Temperatur unterhalb derjenigen beginnt, bei der Entglasung merklich einsetzt, wird der Verdichtungsmechanismus gegenüber dem Entglasungsmechanismus gefördert, was im Ergebnis in Richtung einer höheren Dichte und damit einhergehend einer höheren Festigkeit der verglasten Schicht geht. Geeignete Verbindungen sind beispielsweise Chloride; die Schmelztemperatur von Rubidiumchlorid liegt bei 715 °C und die von Cäsiumchlorid bei 646 °C.

Der Entglasungsmechanismus wird durch die Konzentration des Kristallisationspromotors beeinflusst; je höher die Konzentration ist, umso schneller verläuft die Entglasung. Andererseits kann der Kristallisationspromotor oder ein Teil davon in Prozessen, in denen das stabilisierte Quarzglasbauteil eingesetzt wird, als Verunreinigung wirken. Daher wird die Konzentration so niedrig wie möglich gehalten. Im Hinblick darauf hat es sich als günstig erwiesen, wenn der Anteil der Kristallisationspromotor-Substanz in der porösen Kristallbildungs-Schicht mindestens 0,025 mol-% und maximal 0,5 mol-% beträgt. Die Bezugsgröße (100%) ist dabei die in der Kristallbildungs-Schicht vorhandene molare oxidische Konzentration von Silicium, des Dotier stoffs und etwaiger anderer absichtlich hinzugefügter Substanzen wie beispielsweise Aluminum, vorliegend in der jeweils höchsten Oxidationsstufe.

Die amorphen SiO₂-Partikel in der Kristallbildungs-Schicht haben vorzugsweise splittrige Morphologie. Diese wird beispielsweise durch Zerkleinern von Quarzglas erzeugt. Als besonders günstig hat es sich erwiesen, wenn durch Zerkleinern von Quarzglas erzeugte amorphe SiO₂-Partikel den größten Volumenanteil der Kristallbildungs-Schicht ausmachen.

Durch Zerkleinern, insbesondere Zerbrechen und Zermahlen von Quarzglasformkörpern erzeugte Partikel weisen Bruchflächen auf. Die Bruchstücke haben in der Regel keine sphärische Morphologie, sondern eine nicht-sphärische, scherbenartige, splittrige Morphologie, die für ein dichtes, flächiges Zusammenlagern und für eine gegenseitige Verzahnung der SiO₂-Bruchstücke in einer Grünschicht oder in einer Schüttung förderlich ist. Diese flächige Verzahnung an Bruchflächen der SiO₂-Partikel bildet eine Art "Kartenhausstruktur", die eine höhere Dichte der Kristallbildungs-Schicht ermöglicht und die sich auf deren Festigkeit positiv auswirkt und die Sinteraktivität erhöht. Bevorzugt haben mindestens 80 % der SiO₂-Partikel, besonders bevorzugt mindestens 90 % der SiO₂-Partikel mit einer Teilchengröße von mehr als 10 µm eine nicht-sphärische, splittrige Morphologie. Die poröse Kristallbildungs-Schicht hat im Hinblick auf eine hohe Festigkeit vorzugsweise eine Dichte von mindestens 1,7 g/cm³.

Der Verbund aus Basiskörper und Kristallbildungs-Schicht ist grundsätzlich für den bestimmungsgemäßen Einsatz des Quarzglasbauteils vorbereitet. Er kann aber vor seinem Einsatz noch thermisch verfestigt werden, so dass sich die Porosität verringert und eine Dichte von mindestens 1,75 g/cm³ eingestellt wird. Hinsichtlich des Quarzglasbauteils mit hoher thermischer Stabilität wird die Aufgabe erfindungsgemäß dadurch gelöst, dass es auf einer Beschichtungsfläche eines Basiskörpers aus Quarzglas eine kristalline Schicht aufweist, die SiO₂ und einen Dotierstoff enthält, wobei der Dotierstoff Rubidium ist und der Anteil des Dotierstoffs in der Stabilisierungsschicht im Bereich zwischen 0,025 und 0,5 mol-% liegt.

Die Stabilisierungsschicht beim erfindungsgemäßen Quarzglasbauteil wird durch Entglasen der Kristallbildungs-Schicht beim erfindungsgemäßen Halbzeug erhalten. Das Entglasen geschieht beim bestimmungsgemäßen Einsatz des Quarzglasbauteils oder vorher.

Die Stabilisierungsschicht enthält im Wesentlichen entglaste SiO₂-Partikel und einen oder mehrere Dotierstoffe, die vorab zur Kristallisation der Schicht beigetragen haben. Sie liegen in der Stabilisierungsschicht in der Regel in oxidischer Form vor. Mindestens einer der Dotierstoffe enthält Cäsium oder Rubidium. Die Alkali-Ionen Cäsium oder Rubidium bewirken auch in geringer Konzentration von im Bereich zwischen 0,025 und 0,5 mol-% und bei niedriger Temperatur eine Kristallisation von amorphem SiO₂. Wegen ihres im Vergleich zu anderen Alkali-Ionen großen Ionenradius dringen sie nicht in großem Umfang in das Quarzglas des Basiskörpers ein. Dadurch bleibt die Entglasung im Wesentlichen auf den Bereich der Stabilisierungsschicht beschränkt. Das Quarzglas des Basiskörpers ist vorzugsweise frei von Kristallen. Wegen der chemischen Ähnlichkeit des kristallinen SiO₂ der Stabilisierungsschicht und dem glasigen SiO₂ des Basiskörpers ergibt sich eine gute Haftung der Stabilisierungsschicht.

Die Stabilisierungsschicht ist hinreichend dick, um die zu erwartende mechanische Last aufnehmen zu können. Ihre mittlere Dicke liegt vorzugsweise im Bereich von 0,1 bis 5 mm, bevorzugt im Bereich 0,5 bis 3 mm.

Das erfindungsgemäße Quarzglasbauteil zeigt auch bei Temperaturen bis 1600 °C eine hohe Verformungsstabilität.

### Definitionen und Messmethoden

Einzelne Verfahrensschritte und Begriffe der obigen Beschreibung sowie Messmethoden werden im Folgenden ergänzend definiert. Die Definitionen sind Bestandteil der Beschreibung der Erfindung. Bei einem inhaltlichen Widerspruch zwischen einer der folgenden Definitionen und der übrigen Beschreibung ist das in der Beschreibung Gesagte maßgeblich.

### Kristallisationspromotor

Ein Kristallisationspromotor ist eine Substanz, die eine Kristallisation von amorphem SiO₂ fördert. In der Literatur ist eine Vielzahl derartiger Substanzen beschrieben. Erfindungsgemäß wird Rubidium und/oder Cäsium als Kristallisationspromotor eingesetzt; dies schließt den Einsatz zusätzlicher, anderer Kristallisationspromotor-Substanzen nicht aus.

In der Kristallbildungs-Schicht liegt der Kristallisationspromotor in metallischer Form oder als Verbindung mit einer anderen Komponente oder mit mehreren anderen Komponenten vor, wie beispielsweise als Oxid, Chlorid, Carbonat und/oder Hydroxid.

Nach dem Entglasen der Kristallbildungs-Schicht ist der vormalige Kristallisationspromotor Bestandteil der kristallinen SiO₂-Modifikation; er liegt in der Regel in oxidischer Form vor.

Konzentrationsangaben bezogen auf die Kristallbildungs-Schicht basieren daher auf der molaren oxidischen Konzentration von Silicium, des Dotierstoffs und etwaiger anderer absichtlich hinzugefügter Substanzen, jeweils vorliegend in ihrer höchsten Oxidationsstufe (beispielsweise Rb₂O). Die Ermittlung der Einsatzmenge einer nicht-oxidischen Ausgangssubstanz (beispielsweise RbCl) beruht auf dem Verhältnis der jeweiligen Molgewichte der Ausgangssubstanz in der oxidischen und der nicht-oxidischen Phase.

### Schlicker

Der Begriff "Schlicker" wird für eine Dispersion aus einer Flüssigkeit und SiO₂-Feststoffteilchen verwendet. Als Flüssigkeit kann Wasser eingesetzt werden, das durch Destillation oder Deionisierung gereinigt ist, um den Gehalt an Verunreinigungen zu minimieren.

### Teilchengröße und Teilchenarößenverteiluna

Teilchengröße und Teilchengrößenverteilung der feinteiligen amorphen SiO₂-Teilchen werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Dabei kennzeichnet der D₅₀-Wert diejenige Partikelgröße, die von 50% des kumulativen Volumens der SiO₂-Partikel nicht erreicht wird. Die Partikelgrößenverteilung wird durch Streulicht- und Laserbeugungsspektroskopie nach ISO 13320 ermittelt.

### Splittrige SiO₂-Armierungskörper und Aspektverhältnis

Beim Zerkleinern eines teilverdichteten porösen SiO₂-Formkörpers werden Bruchstücke des ursprünglichen Formkörpers erzeugt, die Bruchflächen und in der Regel eine splittrige, nicht-sphärische Morphologie mit einem Aspektverhältnis (auch als "Strukturverhältnis" bezeichnet) von mindestens 2 zeigen. Unter dem "Aspektverhältnis" wird das Verhältnis von größter Strukturbreite des Bruchteilchens und seiner Dicke verstanden. Ein Aspektverhältnis von mindestens 2 bedeutet demnach, dass die größte Strukturbreite mindestens zweimal größer ist als seine Dicke.

### Messung von Porosität, Porengröße, Porenvolumen und spezifischer Oberfläche (BET-SSA)

Das spezifische Porenvolumen eines porösen Materials bezeichnet das von Hohlräumen belegte, freie Volumen innerhalb des Materials. Das Porenvolumen und die Porosität werden mittels Quecksilberporosimetrie nach ISO15901-1 (2005) ermittelt. Dabei wird Quecksilber unter Einwirkung eines äußeren Drucks in die Poren des porösen Materials gegen die entgegenwirkenden Oberflächenspannungskräfte gepresst. Die dazu benötigte Kraft ist umgekehrt proportional zur Porengröße und daher kann neben dem kumulativen Porengesamtvolumen auch die Porengrößenverteilung der Probe ermittelt werden.

Als Porosimeter werden "ThermoFisher Scientific" PASCAL 140" (niedriger Druck bis 4 bar) und PASCAL 440 (Hochdruck bis 4000 bar) eingesetzt, jeweils kalibriert mittels porösen Glaskugeln mit einem Porendurchmesser von 75 nm (bezogen von: Universität Leipzig, Fakultät für Chemie und Mineralogie, Institut für Technische Chemie). Anhand der "Washburn-Methode" wird die Quecksilber-Dichte für die tatsächliche Temperatur korrigiert. Für die Oberflächenspannung werden 0,484 N/m und für den Kontaktwinkel 141,1° angesetzt. Die Probengröße wird zwischen ca. 30 und 40 mg gewählt. Vor Beginn einer Messung wird die Messprobe bei 120° C für 24 Stunden beheizt. Das Evakuieren der Messprobe auf einen absoluten Druck von 0,01 kPa erfolgt automatisch durch das Gerät.

Die spezifische Oberfläche wird aufgrund einer Sorptionsmessung nach der Methode von Brunauer, Emmet und Teller (BET-Methode) anhand DIN ISO 9277:1995 durchgeführt. Das Messgerät ist "NOVA-3000 (von Quantachrome), das nach der SMART-Methode (Sorption mit Adaptive Rate Dosierung) arbeitet. Als Referenzmaterialien werden Aluminiumoxid SARM-13 und SARM-214 von Quantachrome verwendet. Der Sättigungsdampfdruck von Stickstoff (N2 4.0) wird bestimmt und die Messprobe bei 200 °C für 1 Stunde unter Vakuum getrocknet. Nach dem Abkühlen wird das Gewicht der Messprobe ermittelt und anschließend entgast und dabei bis zu einem Absolutdruck von 200 mbar evakuiert. In demjenigen Druckbereich, in dem sich Monoschichten und Mehrfachschichten absorbierter Moleküle bilden, wird die spezifische Oberfläche (BET-SSA) aus der Multischicht-Adsorptionsisotherme (BET-Isotherme) nach Brunauer, Emmett und Teller bestimmt.

### Partikelgrößenverteilung

Die Partikelgröße und Partikelgrößenverteilung wird mittels Laser-Beugung an einer dispergierten Probe gemäß ISO 13320 bestimmt. Als Messgerät wird ein Mastersizer 3000 der Firma Malvern verwendet, der mit einem He-Ne-Laser, einer blauen LED und einer Nass-Dispergiereinheit für Messungen bei Umgebungstemperatur (23 °C) ausgestattet ist. Die Nass-Dispergiereinheit wird dabei auf eine Ultraschall-Leistung von 80 % eingestellt, und als Dispersionsmittel dient Wasser. Die D50-Werte der Partikelgrößenverteilung werden anhand der Geräte-Software 21 CFR mit einem Formfaktor von 1 bestimmt. Der D50-Wert kennzeichnet dabei diejenige Partikelgröße, die von 50 % des kumulativen Partikelvolumens nicht erreicht wird (Median-Wert der Partikelgröße).

Partikelgrößen von mehr als 315 µm und entsprechende Größenverteilungen wurden durch Siebanalyse unter Einsatz einer Siebeinrichtung "Air Jet RHEWUM LPS 200 MC" (RHEWUM GmbH) ermittelt.

### "Messung von Diffusionsprofilen

Konzentrationsprofile wurden an polierten Querschliffen der beschichteten Messproben nach Abschluss einer vorgegebenen Temperatur-Behandlung durch induktionsgekoppelte Plasmamassenspektroskopie (ICP-MS) ermittelt. Durchführung am Institut für Geowissenschaften, JGU Mainz; ESI NWR 193 nm Excimer Laser mit einer Wellenlänge von 193 nm, gekoppelt mit einer Agilent 7500ce quadrupole ICP-MS.

### Dilatometermessungen

Die thermomechanische Analyse von Messproben erfolgt unter Einsatz eines handelsüblichen Vertikal-Dilatometers L75VS1600 der Firma Linseis GmbH.

### Verformunasmessunaen

### Methode 1: Sagging-Versuche an Testringen

Dabei wurden Testringe aus Quarzglas mit einem Außendurchmesser von 320 mm einer Wandstärke von 5 mm und einer Höhe von 30 mm gefertigt und mit verschiedenen Kristallisationspromotor-Beschichtungen versehen. Zur Durchführung der Saggingversuche wurden mehrere Testringe hintereinander auf ihrer Mantelfläche ruhend in einem Ofen aufgestellt und einer vorgegebenen Temperatur-Behandlung unterzogen. Nach dem Abkühlen wurde die Verformung der Testringe qualitativ visuell beurteilt.

### Methode 2: Durchbiegungsversuche an Testplatten

Dabei wurden Platten aus elektrogeschmolzenem Quarzglas mit Abmessungen 50 × 300 × 3 mm gefertigt und mit verschiedenen Kristallisationspromotor-Beschichtungen versehen. Zur Durchführung der Durchbiegungsversuche wurden die Testplatten auf Keramikstützen mit einem freien Abstand von 240mm aufgelegt und in einem Ofen einer vorgegebenen Temperatur-Behandlung unterzogen. Nach dem Abkühlen wurde die maximale Durchbiegung der Platte ermittelt.

### Raman Spektroskopie

Mittels Raman-Spektroskopie wurde das Vorliegen von Cristobalit Phase identifiziert. Das dabei eingesetzte Gerät hat die Bezeichnung " LabRam HR 800" (Horiba Group). Es ist gekoppelt mit einem Olympus BX41 optischen Mikroskop und einem Si CCD (Charge-Coupled Device) Detektor.

Die Messung erfolgte bei Raumtemperatur, wobei Spektren bei Wellenzahlen zwischen 150 bis 1200 cm⁻¹ aufgenommen wurden. Dazu wurde ein Ar+-Ionenlaser (514 nm Emission) eingesetzt.

### Ausführungsbeispiel

Nachfolgend wird die Erfindung anhand von Ausführungsbeispielen und einer Zeichnung näher erläutert. Dabei zeigt im Einzelnen
- **Figur 1**: Ergebnis einer Differenz-Thermoanalyse bei einer Kristallbildungs-Schicht, die Rubidiumchlorid als Kristallisationspromotor enthält,
- **Figur 2**: Ergebnis einer Differenz-Thermoanalyse bei einer Kristallbildungs-Schicht , die Cäsiumchlorid als Kristallisationspromotor enthält,
- **Figur 3**: ein Foto mehrerer Rohrabschnitte nach Durchführung eines sogenannten "Sagging-Versuchs" in einem Ofen,
- **Figur 4**: Ergebnis einer Diffusionsmessung für den Kristallisationspromotor RbCl bei einer Diffusionstemperatur von 1300 °C,
- **Figur 5**: Ergebnis einer Diffusionsmessung für den Kristallisationspromotor RbCl bei einer Diffusionstemperatur von 1500 °C,
- **Figur 6**: Ergebnis einer Diffusionsmessung für den Kristallisationspromotor CsCl bei einer Diffusionstemperatur von 1500 °C
- **Figur 7**: eine durch Einwirkung eines Kristallisationspromotors kristallisierte Glasoberfläche in schematischer Darstellung,
- **Figur 8**: eine durch Einwirkung eines Kristallisationspromotors kristallisierte Grünschicht auf einer Glasoberfläche in schematischer Darstellung,
- **Figur 9**: Ergebnis einer Raman-spektroskopischen Messung an einer auf 900 °C erhitzen Grünschicht, die mit Cäsium dotiert ist,
- **Figur 10**: Ergebnis einer Raman-spektroskopischen Messung an einer auf 1100 °C erhitzen Grünschicht, die mit Cäsium dotiert ist,
- **Figur 11**: Ergebnis einer Raman-spektroskopischen Messung an einer auf 900 °C erhitzen Grünschicht, die mit Rubidium dotiert ist, und
- **Figur 12**: Ergebnis einer Raman-spektroskopischen Messung an einer auf 1100 °C erhitzen Grünschicht, die mit Rubidium dotiert ist,

### Herstellen eines Kristallisationspromotor-haltiaen SiO₂-Schlickers

In eine Dispersionsflüssigkeit (Wasser) wird amorphe Quarzglaskörnung aus natürlichem Rohstoff mit Korngrößen im Bereich zwischen 250 µm und 650 µm eingemischt. Die Quarzglaskörnung wurde vorab in einem Heißchlorierverfahren gereinigt; es wird darauf geachtet, dass der Cristobalitgehalt unter 1 Gew.-% liegt.

Diese Mischung wird in einer mit Quarzglas ausgekleideten Trommelmühle mittels Mahlkugeln aus Quarzglas auf einem Rollenbock bei 23 U/min während einer Dauer von 3 Tagen soweit vermahlen, dass sich ein homogener Schlicker bildet. Im Verlauf des Vermahlens kommt es infolge des in Lösung gehenden SiO₂ zu einer Absenkung des pH-Werts auf etwa 4.

Die nach dem Vermahlen der Quarzglaskörnung erhaltenen SiO₂-Körnungsteilchen sind splittriger Natur und zeigen eine Teilchengrößenverteilung, die durch einen D₅₀- Wert von etwa 8 µm und durch einen D₉₀-Wert von etwa 40 µm gekennzeichnet ist. Dem homogenen Schlicker werden SiO₂-Nanoteilchen mit Durchmessern um 40 nm ("pyrogene Kieselsäure") mit einem Gewichtsanteil von 5 Gew.-% (bezogen auf den Feststoffgehalt der Dispersion) hinzugefügt. Nach weiterer Homogenisierung wird ein bindemittelfreier SiO₂-Grundschlicker erhalten. Der Feststoffgehalt der Dispersion liegt bei 75 Gew.-%; der SiO₂-Gehalt der amorphen SiO₂-Teilchen beträgt mindestens 99,99 Gew.-%.

Zur Herstellung einer Dispersion, die mit einem Kristallisationspromotor in Form von RbCl beziehungsweise in Form von CsCl dotiert ist, werden parallel wässrige Dotierstofflösungen aus RbCl beziehungsweise aus CsCl (Molverhältnis 4:1) in 400 ml Reinstwasser erzeugt. Anstelle der Chloride können auch andere AlkaliVerbindungen eingesetzt werden, wie beispielsweise organische Verbindungen, Nitride oder Fluoride.

Die Dotierstofflösung wird dem homogenen Grundschlicker in unterschiedlicher Menge hinzugefügt. Nach weiterer Homogenisierung werden bindemittelfreie SiO₂-Dispersionen erhalten, die den Kristallisationspromotor in der gewünschten Konzentration enthalten.

Die Zusammensetzung der jeweiligen Dispersionen sind in Tabelle 1 angegeben:

### Herstellung von Messproben

Zur Ermittlung der thermischen Stabilität anhand von Durchbiegungsversuchen wurden Testplatten aus elektrogeschmolzenem Quarzglas mit Abmessungen 50 x 300 x 3 mm durch Tauchen allseitig mit einer Schicht mit diesen SiO₂-haltigen Dispersionen (Schlickerschicht) mit einer mittleren Dicke von 1 mm versehen und die Schlickerschicht anschließend getrocknet.

Zur Herstellung von Vergleichsproben wurden Quarzglas-Testplatten allseitig mit einer Salzlösung von Kristallisationspromotoren beschichtet. Diese Beschichtungen enthalten den Kristallisationspromotor beziehungsweise eine Vorläufersubstanz des Kristallisationspromotors in hoher Konzentration (praktisch 100 %) aber keine amorphen SiO₂-Partikel. Bei zwei anderen Vergleichsproben blieb die Testplatte unbeschichtet; beziehungsweise sie wurde direkt mit Cristobalit-Kristallpulver bestreut.

Zur Ermittlung der thermischen Stabilität anhand von Verformungsversuchen an stehenden Quarzglasringen ("Saggingversuche") wurden Rohrabschnitte (Testringe) aus Quarzglas mit einem Außendurchmesser von 320 mm einer Wandstärke von 5 mm und einer Höhe von 30 mm gefertigt und auf der Außenwandung einer Schlickerschicht einer Dicke von etwa 1 mm aufgesprüht.

Zur Herstellung von Vergleichsproben wurden auch hier Quarzglas-Testringe allseitig mit einer Salzlösung von Kristallisationspromotoren beschichtet. Diese Beschichtungen enthalten den Kristallisationspromotor beziehungsweise eine Vorläufersubstanz des Kristallisationspromotors in hoher Konzentration (praktisch 100 %) aber keine amorphen SiO₂-Partikel. Diese Schichten haben geringe Dicken von ca. 10 µm.

Für die Messungen von Diffusionsprofilen wurden Rundscheiben aus Quarzglas mit einem Durchmesser von 35 mm und einer Dicke von 6 mm durch Aufsprühen einseitig mit einer Schlickerschicht mit einer mittleren Dicke von 1 mm versehen.

Das Trocknen der Schlickerschicht zu einer porösen Grünschicht erfolgt jeweils, indem die Schlickerschicht an Luft acht Stunden lang ruht. Die vollständige Trocknung erfolgt unter Einsatz eines IR-Strahlers an Luft während 4 Stunden. Die Gründichte beträgt jeweils etwa 1,75 g/cm³.

Bei einer der Messproben wird die getrocknete Grünschicht anschließend in einem Sinterofen bei einer Temperatur um 1000 °C thermisch leicht vorverdichtet; sie hat danach eine Dichte von etwa 1,85 g/cm³.

In **Tabelle 1** sind die charakteristischen Herstellungsparameter und die Messergebnisse der Proben zusammengefasst.

**Tabelle 1**

| **Nr.** | **Kristallisationspromotor** | **M (Mol-%)** | **Amorphe SiO₂**-**Partikel** | **Schichtdicke (mm)** | **Durchbiegung (mm)** |
|---|---|---|---|---|---|
| **1** | RbCl | 0,5 | Ja | 1 mm | <2 |
| **2** | RbCl | 0,1 | Ja | 1 mm | <2 |
| **3** | RbCl | Salzlage | Nein | 10 µm | -10 |
| **4** | CsCI | 0,5 | Ja | 1 mm | <2 |
| 5 | CsCI | 0,1 | Ja | 1 mm | <2 |
| **6** | CsCI | Salzlage | Nein | 10 µm | -10 |
| **7** | Al₂(SO₄)₃ | 0,5 | Ja | 1 mm | -10 |
| **8** | Al₂(SO₄)₃ | Salzlage | Nein | 10 µm | ~10 |
| **9** | NaCl | 0,1 | Ja | 10 mm | <2 |
| **10** | CaCl₂ | 0,1 | Ja | 10 mm | -7 |
| **11** | MgCl₂ | 0,1 | Ja | 1 mm | -8 |
| **12** | LaCl₃ | 0,1 | Ja | 1 mm | ~9 |
| **13** | ZrCl₄ | 0,1 | Ja | 1 mm | -10 |
| **14** | Cristobalit | 0,1 | Ja | 1 mm | -10 |
| **15** | SiO₂-Schicht ohne Dotierung | 0,1 | Ja | 1 mm | -10 |
| **16** | Unbeschichtete Quarzglasplatte | entfällt | Nein | Entfällt | -10 |

| | | | | | |
|---|---|---|---|---|---|
| M: Molanateil des Kristallisationspromotors in der Dispersion, bezogen auf den Feststoffanteil, die Angabe "Salzlage" bezieht sich auf eine dünne, etwa 10 µm dicke Oberflächenbeschichtung aus einem löslichen Salz des Kristallisationspromotors. | | | | | |

### Ergebnisse von Verformungsmessungen

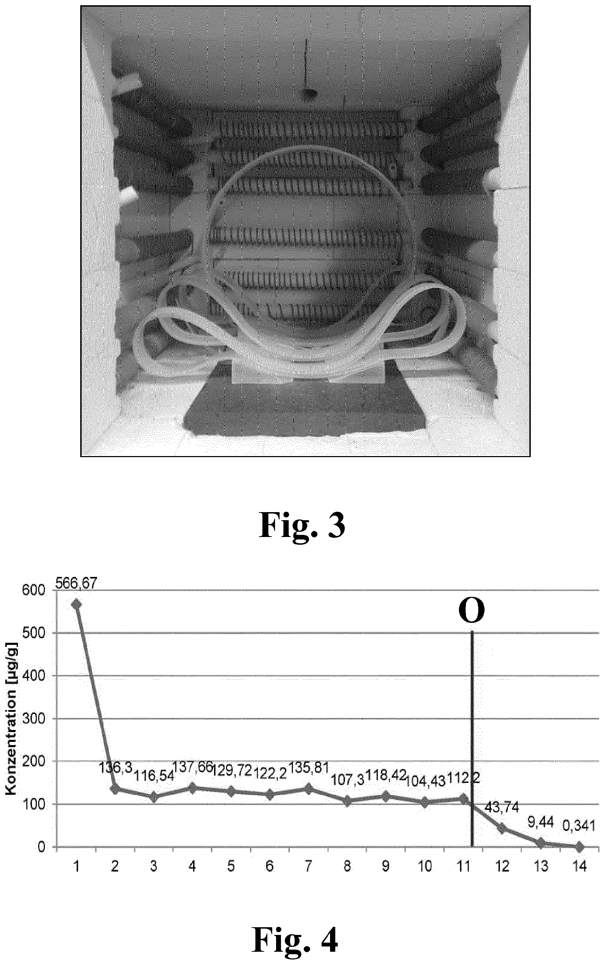

Das Foto von **Figur 3** zeigt das Ergebnis von Standard-Verformungsmessungen (Sagging-Versuchen) bei vier Testringen aus Quarzglas, beschichtet mit Kristallisationspromotor gemäß den obigen Proben 2, 3, 7 und 8 aus Tabelle 1. Für diesen Test wird der Ofen auf eine Temperatur von 1365 °C aufgeheizt und 18h bei dieser Temperatur gehalten.

Es zeigt sich, dass allein der Testring von Probe 2 dieser Belastung standhält. In einem Experiment wurde er versuchsweise auf eine Temperatur von 1600 °C aufgeheizt und zeigte auch dabei keine nennenswerte Verformung. Für alle anderen Proben liegt die maximale Verformungstemperatur unterhalb von 1365 °C.

Bei einer anderen Serie von Verformungsmessungen wurde die Durchbiegung der oben erwähnten Messproben in Form beschichteter Platten aus elektrogeschmolzenem Quarzglas ermittelt. Die beschichteten Quarzglasplatten wurden dabei mit ihren Enden auf Stützen aufgelegt und in einem Ofen einer vorgegebenen Temperatur-Behandlung unterzogen. Nach dem Abkühlen wurde die maximale Durchbiegung der Platte ermittelt. In der letzten Spalte von Tabelle 1 sind so ermittelten Durchbiegungen für eine Temperatur-Behandlung mit folgender Temperatur-Behandlung genannt: Aufheizen des Ofens innerhalb von 3h von 200°C auf 1250°C, Halten dieser Temperatur für 6h, dann freies Abkühlen des Ofens.

Demnach wird eine geringe Durchbiegung erreicht, wenn die Kristallbildungs-Schicht zwei Bedingungen erfüllt. Erstens, sie enthält einen Kristallisationspromotor in Form der Alkalien Rb, Cs oder Na, und zweitens, sie enthält amorphe SiO₂-Partikel. Alle anderen Messproben zeigen eine unzureichende thermische Stabilisierung, wa sich in einer Durchbiegung von etwa 10 mm, zeigt. Das gilt auch für die unter Einsatz von Cristobalit gemäß Probe 14 hergestellte Kristallbildungs-Schicht. Die NaCl-haltige Kristallbildungs-Schicht von Probe 9 ist ein Vergleichsbeispiel. Sie zeigt zwar eine ausreichende thermische Stabilisierung, hat aber andere Nachteile; insbesondere hinsichtlich der Verunreinigungswirkung von Natrium.

### Ergebnisse von Dilatometer-Messungen

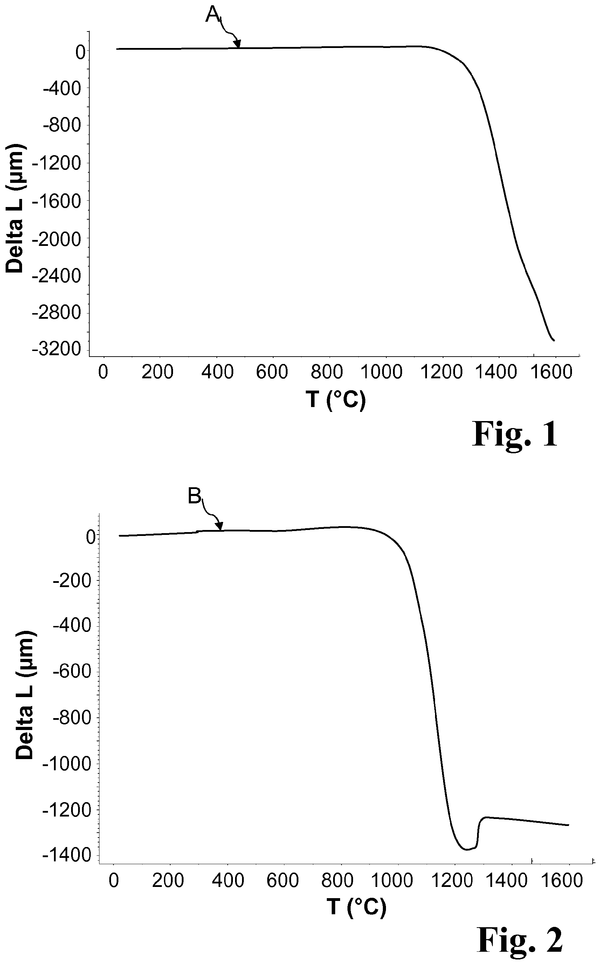

Die Diagramme der **Figuren 1 und 2** zeigen Ergebnisse dilatometrischer Messungen. Auf der Ordinate ist die Längenveränderung Delta L (in µm) der Messprobe als Funktion der Temperatur T (in °C) aufgetragen.

Kurve A in Figur 1 zeigt den Längenänderungsverlauf bei einer Grünschicht, die aus einem Schlicker ohne Zusatz von Kristallisationspromotor erzeugt worden ist, und Figur 2 das Ergebnis bei einer aus Probe 4 hergestellten Grünschicht. Demnach zeigt die undotierte Grünschicht erst bei einer Temperatur um 1200 °C eine merkliche Längenänderung, wohingegen bei der Grünschicht aus Probe 4 bereits bei einer Temperatur um 950 °C eine Längenänderung einsetzt (Kurve B in Figur 2).

Die Längenänderung zeigt den Sinterbeginn der jeweiligen Grünschicht an. Demnach setzen Sintern und Verdichten bei der dotierten Grünschicht deutlich früher ein als bei der undotierten Schicht. Der früher einsetzende Sintervorgang kann auf einen Beitrag durch Flüssigphasensintern zurückgeführt werden. Der Anstieg der Dilatometerkurve von Figur 2 bei einer Temperatur um 1200°C zeigt darüber hinaus den bereits einsetzenden Entglasungsvorgang. Beide Effekte, bei der dotierten Grünschicht - die frühere Verdichtung und die kurz danach einsetzende Entgasung - tragen zur schnellen mechanischen Stabilisierung der Schicht bei.

### Ergebnisse von Entglasungsversuchen und Diffusionsmessungen

Die Diffusionsproben wurden in einem Ofen unter Luft auf einer Temperatur von 200 °C aufgeheizt und bei dieser Temperatur eine Stunde lang gehalten. Danach wurde innerhalb von drei Stunden auf unterschiedliche Messtemperaturen von beispielsweise 1300/1500/1600 °C hochgeheizt und danach bei diesen Temperaturen sechs Stunden lang gehalten. Anschließend wurde der Ofen geöffnet und frei abgekühlt.

Es zeigt sich, dass die Kristallbildungs-Schicht bereits bei Temperaturen um Tg (1150 °C) signifikant entglast und dass die Kristallisation nicht oder kaum im Quarzglas-Substrat (Rundplatte), sondern ausschließlich oder zumindest bevorzugt in der porösen Kristallbildungs-Schicht stattfindet, wie dies in Figur 8 schematisch dargestellt ist. Die ehemaligen Kristallbildungs-Schichten zeigen durchweg Porositäten von weniger als 25 %.

In einem weiteren Versuch wurde die Quarzglasplatte mit undotiertem SiO₂-Schlicker beschichtet, die Schlickerschicht getrocknet und bei 1150°C vorgesintert. Auf einer Teilfläche von ca. 100×100mm² werden 5ml Salzlösung (1 mol% CsCl) aufgetragen. Die Salzlösung dringt in die noch poröse Schlickerschicht ein, trocknet und infiltriert damit die Partikeloberflächen. Nach dem erneuten Sintern im Ofen bei 1200°C treten allerdings Delaminationen und Risse auf - ein makroskopischer Hinweis auf Cristobalitbildung in der Schicht. Die gewünschte Stabilisierung wird hier zwar erreicht, allerdings ist die Haftung der Stabilisierungsschicht nicht optimal. Dies kann darauf zurückgeführt werden, dass durch das Infiltrieren der vorgesinterten Grünschicht eine Verteilung des Kristallisationspromotors erreicht wird, die weniger homogen ist als bei Grünschichten, die aus Schlicker erzeugt worden sind, die bereits anfänglich den Kristallisationspromotor in gelöster Form enthalten.

An den so gewonnenen Messproben wurden die Konzentrationsprofile mittels durch induktionsgekoppelte Plasmamassenspektroskopie (ICP-MS) ermittelt, wie oben beschrieben. Der Abstand der Messpunkte des Profils beträgt etwa 100 µm.

Das Diagramm von **Figur 4** zeigt das Ergebnis für die Diffusionsprobe mit der Zusammensetzung von Probe 1 gemäß der Tabelle nach der Temperaturbehandlung bei 1300 °C. Dabei ist die Konzentration K (in µg/g) gegen die Sequenz S der Messpunkte aufgetragen. Die Linie "0" markiert die Grenzfläche zwischen der entglasten Stabilisierungsschicht und dem Quarzglas-Substrat. Es ist eine gewisse Eindiffusion von Rubidium in das Substrat im Bereich von 30 bis 60 µm/g erkennbar. Die Konzentration innerhalb des Substrats nimmt aber nach 5 - 6 Messpunkten (das heißt nach einer Schichtdicke von 500-600 µm) merklich ab.

Das Diagramm von **Figur 5** zeigt das Ergebnis für die Diffusionsprobe mit der Zusammensetzung von Probe 1 gemäß der Tabelle nach der Temperaturbehandlung bei 1500 °C. Hier ist eine deutliche Abreicherung an Rb durch Verdampfung erkennbar. Die Konzentrationen in der Stabilisierungsschicht liegen nur noch bei etwa 10% der Konzentrationen der Messprobe von Figur 4. Nur die Konzentration innerhalb des Substrats hat noch etwa das Niveau der Messprobe von Figur 4. Es zeigt sich, dass die Verdampfung von Rubidium auch bei der bei 1400 °C behandelten Messprobe merklich ist.

Durch das Verdampfen wird Rubidium aus der Stabilisierungsschicht entfernt und kann nicht weiter im ursprünglichen Umfang als Kristallisationspromotor wirken. Dadurch wird eine Anreicherung in dem Substrat, die zu einer Kristallisation des Substrats führen kann, vermieden. Auf diese Weise wird eine Langzeitstabilität des Systems "entglaste Stabilisierungsschicht / glasiges Substrat " auch bei hoher Einsatztemperatur erreicht.

In **Figur 6** ist das Konzentrationsprofil für die Diffusionsprobe mit der Zusammensetzung von Probe 4 gemäß der Tabelle nach der Temperaturbehandlung bei 1500 °C dargestellt. Eine Eindiffusion von Cs in das Substrat findet auch bei dieser hohen Temperatur kaum statt. Auch dadurch wird eine Anreicherung in dem Substrat vermieden, die zu einer Kristallisation führen könnte, so dass auch auf diese Weise eine Langzeitstabilität des Systems "entglaste Stabilisierungsschicht / glasiges Substrat " erzielt wird.

Es konnte gezeigt werden, dass Dotierungen mit Rb und Cs in ähnlicher Weise geeignet sind, Entglasungen auszulösen, wie die "üblichen" Alkalien Li, Na bzw. K. Das aber die Nachteile, die mit diesen Alkalien einhergehen, und die sich insbesondere durch deren Anreicherung im Quarzglas-Substrat und der dadurch fortschreitenden Entglasung des Substrats zeigen, vermeiden wird. Denn bei Cs gibt es keine bzw. eine kaum nachweisbare Eindiffusion aus der Stabilisierungsschicht in das glasige Substratmaterial, und bei Rb kommt es bei einer EinsatzTemperatur von mehr als 1400 °C zu einer merklichen Abreicherung im Lauf der Zeit.

### Ergebnisse von Kristallisationsmessungen

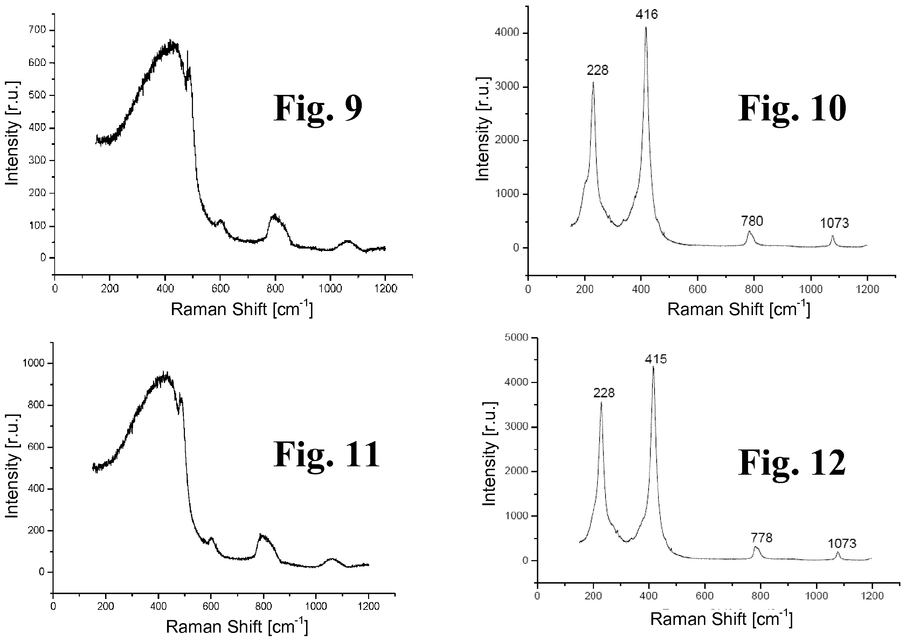

Es wurden mehrere Proben bei einer Temperatur im Temperaturintervall von 900 C bis 1600 °C für 6 h behandelt und anschließend die Kristallbildung ramanspektroskopisch analysiert. Die wichtigsten Messergebnisse sind in den Figuren 9 bis 12 zusammengefasst.

In den Diagrammen ist jeweils die gemessene Raman-Intensität gegen die Wellenzahl des Raman-Shifts (in cm⁻¹) aufgetragen. Die Messproben entsprechen den Proben 1 und 4 aus Tabelle 1 für Behandlungs-Temperaturen von 900 °C beziehungsweise 1100 °C. Demnach ergibt sich bei der Behandlungs-Temperatur von 900 °C sowohl bei Probe 1 (Figur 11) als auch bei Probe 4 (Figur 9) keine ausgeprägte Intensitätsspitze im Messspektrum, was darauf hindeutet, dass bei dieser Behandlung keine Kristallisation der Messproben stattgefunden hat.

Demgegenüber zeigen beide Messproben bei der Behandlungs-Temperatur von 1100 °C ausgeprägte Intensitätsmaxima bei Wellenzahlen von 228, 416, 778 und 1073 cm⁻¹, die sämtlich Cristobalit zuzuordnen sind. Dies ist ein Beleg für das frühe Einsetzen der Cristobalit-Bildung bei beiden Messproben.

## Patentansprüche

1. Verfahren zur Herstellung eines Quarzglasbauteils, wobei auf einer Beschichtungsfläche eines Basiskörpers aus Quarzglas eine Kristallbildungs-Schicht erzeugt wird, die einen Kristallisationspromotor enthält, **dadurch gekennzeichnet, dass** eine amorphe SiO₂-Partikel enthaltende, poröse Kristallbildungs-Schicht mit einer mittleren Dicke im Bereich von 0,1 bis 5 mm erzeugt wird, und dass als Kristallisationspromotor eine Substanz eingesetzt wird, die Cäsium und/oder Rubidium enthält, und dass die Kristallisationspromotor-Substanz eine Schmelztemperatur unterhalb von 1150 °C hat.

2. Verfahren nach Anspruch 1, **dadurch gekennzeichnet, dass** die Kristallisationspromotor-Substanz eine Schmelztemperatur unterhalb von 1100 °C hat.

3. Verfahren nach Anspruch 1 oder 2, **dadurch gekennzeichnet, dass** der Anteil der Kristallisationspromotor-Substanz in der porösen Kristallbildungs-Schicht mindestens 0,025 mol-% und maximal 0,5mol-% beträgt, wobei die poröse Kristallbildungs-Schicht vorzugsweise mit einer mittleren Dicke im Bereich von 0,5 bis 3 mm, erzeugt wird.

4. Verfahren nach einem der vorhergehenden Ansprüche, **dadurch gekennzeichnet, dass** durch Zerkleinern von Quarzglas erzeugte amorphe SiO₂-Partikel den größten Volumenanteil der Kristallbildungs-Schicht ausmachen.

5. Verfahren nach einem der vorhergehenden Ansprüche, **dadurch gekennzeichnet, dass** das Erzeugen der Kristallbildungs-Schicht umfasst:
(a) Auftragen einer Dispersion, die die amorphen SiO₂-Partikel in einer Flüssigkeit enthält als Schlickerschicht auf der Beschichtungsfläche, und
(b) Trocknen der Schlickerschicht unter Bildung einer Grünschicht.

6. Verfahren nach Anspruch 5, **dadurch gekennzeichnet, dass** der Kristallisationspromotor oder eine Vorläufersubstanz desselben in der Dispersion in gelöster Form enthalten ist.

7. Verfahren nach Anspruch 5 oder 6, **dadurch gekennzeichnet, dass** die Grünschicht eine Gründichte von mindestens 1,7 g/cm³ hat.

8. Verfahren nach einem der Ansprüche 4 bis 6, **dadurch gekennzeichnet, dass** die Grünschicht bei einer Temperatur im Bereich von 670 °C bis 1000 °C thermisch verdichtet wird.

9. Verfahren nach einem der vorhergehenden Ansprüche, **dadurch gekennzeichnet, dass** die poröse Kristallbildungs-Schicht auf eine Temperatur von weniger als 1250 °C, vorzugsweise weniger als 1150 °C erhitzt wird, und dass beim Erhitzen der Schicht eine Cristobalitbildung einsetzt.

10. Halbzeug zur Herstellung eines Quarzglasbauteils mit hoher thermischer Stabilität, das auf einer Beschichtungsfläche eines Basiskörpers aus Quarzglas eine Kristallbildungs-Schicht aufweist, die einen Kristallisationspromotor enthält, **dadurch gekennzeichnet, dass** die Kristallbildungs-Schicht amorphe SiO₂-Partikel enthält, dass sie porös ist, dass sie eine mittlere Dicke im Bereich von 0,1 bis 5 mm aufweist und dass der Kristallisationspromotor eine Substanz ist, die Cäsium und/oder Rubidium enthält, und dass die Kristallisationspromotor-Substanz eine Schmelztemperatur unterhalb von 1150 °C aufweist.

11. Halbzeug nach Anspruch 10, **dadurch gekennzeichnet, dass** die Kristallisationspromotor-Substanz eine Schmelztemperatur unterhalb von 1100 °C aufweist.

12. Halbzeug nach Anspruch 10 oder 11, **dadurch gekennzeichnet, dass** der Anteil der Kristallisationspromotor-Substanz in der porösen Kristallbildungs-Schicht mindestens 0,025 mol-% und maximal 0,5 mol-% beträgt, wobei die poröse Kristallbildungs-Schicht vorzugsweise eine mittlere Dicke im Bereich von 0,5 bis 3 mm aufweist.

13. Halbzeug nach einem der Ansprüche 10 bis 12, **dadurch gekennzeichnet, dass** durch Zerkleinern von Quarzglas erzeugte amorphe SiO₂-Partikel den größten Volumenanteil der Kristallbildungs-Schicht ausmachen.

14. Halbzeug nach einem der Ansprüche 10 bis 13, **dadurch gekennzeichnet, dass** die poröse Kristallbildungs-Schicht eine Dichte von mindestens 1,7 g/cm³ hat.

15. Quarzglasbauteil mit hoher thermischer Stabilität, das auf einer Beschichtungsfläche eines Basiskörpers aus Quarzglas eine kristalline Stabilisierungsschicht aufweist, die SiO₂ und einen Dotierstoff enthält, wobei der Dotierstoff Rubidium ist und der Anteil des Dotierstoffs in der Stabilisierungsschicht im Bereich zwischen 0,025 und 0,5 mol-% liegt.

## Claims

1. A method for creating a quartz glass component, a crystal formation layer containing a crystallization promoter being produced on a coating surface of a base body made of quartz glass, **characterized in that** a porous crystal formation layer containing amorphous SiO₂ particles and having an average thickness in the range from 0.1 to 5 mm is created, **in that** a substance containing cesium and/or rubidium is used as the crystallization promoter, and **in that** the crystallization promoter substance has a melting temperature below 1150°C.

2. The method according to claim 1, **characterized in that** the crystallization promoter substance has a melting temperature below 1100°C.

3. The method according to claim 1 or claim 2, **characterized in that** the proportion of the crystallization promoter substance in the porous crystal formation layer is at least 0.025 mol.% and at most 0.5 mol.%, the porous crystal formation layer preferably being produced so as to have an average thickness in the range from 0.5 to 3 mm.

4. The method according to any of the preceding claims, **characterized in that** amorphous SiO₂ particles produced by comminuting quartz glass constitute the largest proportion by volume of the crystal formation layer.

5. The method according to any of the preceding claims, **characterized in that** the production of the crystal formation layer comprises:
(a) applying a dispersion containing the amorphous SiO₂ particles in a liquid as a slurry layer on the coating surface, and
(b) drying the slurry layer to form a green layer.

6. The method according to claim 5, **characterized in that** the crystallization promoter or a precursor substance thereof is contained in dissolved form in the dispersion.

7. The method according to claim 5 or claim 6, **characterized in that** the green layer has a green density of at least 1.7 g/cm³.

8. The method according to any of claims 4 to 6, **characterized in that** the green layer is thermally compressed at a temperature in the range from 670°C to 1000°C.

9. The method according to any of the preceding claims, **characterized in that** the porous crystal formation layer is heated to a temperature of less than 1250°C, preferably less than 1150°C, and **in that** a cristobalite formation is used when the layer is heated.

10. A semi-finished product for creating a quartz glass component having high thermal stability, which semi-finished product has a crystal formation layer on a coating surface of a base body made of quartz glass, which crystal formation layer contains a crystallization promoter, **characterized in that** the crystal formation layer contains amorphous SiO₂ particles, **in that** said layer is porous, **in that** said layer has an average thickness in the range from 0.1 to 5 mm, **in that** the crystallization promoter is a substance containing cesium and/or rubidium, and **in that** the crystallization promoter substance has a melting temperature below 1150°C.

11. The semi-finished product according to claim 10, **characterized in that** the crystallization promoter substance has a melting temperature below 1100°C.

12. The semi-finished product according to claim 10 or claim 11, **characterized in that** the proportion of the crystallization promoter substance in the porous crystal formation layer is at least 0.025 mol.% and at most 0.5 mol.%, the porous crystal formation layer preferably having an average thickness in the range from 0.5 to 3 mm.

13. The semi-finished product according to any of claims 10 to 12, **characterized in that** amorphous SiO₂ particles produced by comminuting quartz glass constitute the largest proportion by volume of the crystal formation layer.

14. The semi-finished product according to any of claims 10 to 13, **characterized in that** the porous crystal formation layer has a density of at least 1.7 g/cm³.

15. A quartz glass component having high thermal stability, which has a crystalline stabilization layer on a coating surface of a base body made of quartz glass, which stabilization layer contains SiO₂ and a dopant, wherein the dopant is rubidium and the proportion of the dopant in the stabilization layer is in the range between 0.025 and 0.5 mol.%.

## Revendications

1. Procédé de fabrication d'un composant en verre de quartz, une couche de formation de cristaux étant produite sur une surface de revêtement d'un corps de base en verre de quartz, laquelle couche contient un promoteur de cristallisation, **caractérisé en ce qu'**une couche de formation de cristaux poreuse contenant des particules de SiO₂ amorphes et d'une épaisseur moyenne dans la plage de 0,1 à 5 mm est produite, et **en ce qu'**une substance qui contient du césium et/ou du rubidium est utilisée comme promoteur de cristallisation et **en ce que** la substance de promoteur de cristallisation possède une température de fusion inférieure à 1150°C.

2. Procédé selon la revendication 1, **caractérisé en ce que** la substance de promoteur de cristallisation possède une température de fusion inférieure à 1100°C.

3. Procédé selon la revendication 1 ou 2, **caractérisé en ce que** la proportion de substance de promoteur de cristallisation dans la couche de formation de cristaux poreuse est d'au moins 0,025 % molaire et d'au maximum 0,5 % molaire, la couche de formation de cristaux poreuse étant produite de préférence avec une épaisseur moyenne dans la plage de 0,5 à 3 mm.

4. Procédé selon l'une des revendications précédentes, **caractérisé en ce que** les particules de SiO₂ amorphes produites par le broyage de verre de quartz constituent la plus grande proportion en volume de la couche de formation de cristaux.

5. Procédé selon l'une des revendications précédentes, **caractérisé en ce que** la production de la couche de formation de cristaux comprend :
(a) l'application d'une dispersion qui contient les particules de SiO₂ amorphes dans un liquide comme couche de barbotine sur la surface de revêtement, et
(b) le séchage de la couche de barbotine avec formation d'une couche verte.

6. Procédé selon la revendication 5, **caractérisé en ce que** le promoteur de cristallisation ou un précurseur de celui-ci est contenu sous forme dissoute dans la dispersion.

7. Procédé selon la revendication 5 ou 6, **caractérisé en ce que** la couche verte possède une densité verte d'au moins 1,7 g/cm³.

8. Procédé selon l'une des revendications 4 à 6, **caractérisé en ce que** la couche verte est densifiée thermiquement à une température dans la plage de 670°C à 1000°C.

9. Procédé selon l'une des revendications précédentes, **caractérisé en ce que** la couche de formation de cristaux poreuse est chauffée à une température inférieure à 1250°C, de préférence inférieure à 1150°C, et **en ce que**, lors du chauffage de la couche, une formation de cristobalite commence.

10. Produit semi-fini pour la fabrication d'un composant en verre de quartz à haute stabilité thermique, lequel présente une couche de formation de cristaux sur une surface de revêtement d'un corps de base en verre de quartz, laquelle couche contient un promoteur de cristallisation, **caractérisé en ce que** la couche de formation de cristaux contient des particules de SiO₂ amorphes, **en ce qu'**elle est poreuse, **en ce qu'**elle présente une épaisseur moyenne dans la plage de 0,1 à 5 mm et **en ce que** le promoteur de cristallisation est une substance qui contient du césium et/ou du rubidium, et **en ce que** la substance de promoteur de cristallisation présente une température de fusion inférieure à 1150 °C.

11. Produit semi-fini selon la revendication 10, **caractérisé en ce que** la substance de promoteur de cristallisation présente une température de fusion inférieure à 1100°C.

12. Produit semi-fini selon la revendication 10 ou 11, **caractérisé en ce que** la proportion de la substance de promoteur de cristallisation dans la couche de formation de cristaux poreuse est d'au moins 0,025 % molaire et d'au maximum 0,5 % molaire, la couche de formation de cristaux poreuse présentant de préférence une épaisseur moyenne dans la plage de 0,5 à 3 mm.

13. Produit semi-fini selon l'une des revendications 10 à 12, **caractérisé en ce que** les particules de SiO₂ amorphes produites par le broyage de verre de quartz constituent la plus grande proportion en volume de la couche de formation de cristaux.

14. Produit semi-fini selon l'une des revendications 10 à 13, **caractérisé en ce que** la couche de formation de cristaux poreuse possède une densité d'au moins 1,7 g/cm³.

15. Composant en verre de quartz à haute stabilité thermique, lequel présente une couche de stabilisation cristalline sur une surface de revêtement d'un corps de base en verre de quartz, laquelle couche contient du SiO₂ et un dopant, le dopant étant le rubidium et la proportion de dopant dans la couche de stabilisation étant située dans la plage comprise entre 0,025 et 0,5 % molaire.
